# EUROPÄISCHE PATENTANMELDUNG

(11) **EP 4 699 868 A1**
(43) Veröffentlichungstag der Anmeldung: **25.02.2026**
(21) Anmeldenummer: 25189222.0
(22) Anmeldetag: 14.07.2025
(51) Int. Cl.: B60R 16/02

(54) **VERFAHREN ZUR ANBRINGUNG EINER TÜLLE AN EINEM LEITUNGSSTRANG SOWIE VORRICHTUNG**

(30) Priorität: 23.08.2024 DE 102024208052
(71) Anmelder: LEONI Wiring Systems Slovakia spol. s r.o., 911 01 Trencin (SK)
(72) Erfinder: HORNÁCEK, Tomas, 91108 Trencin (SK); MIKUSOVA, Miroslava, 018 52 Pruske (SK)
(74) Vertreter: FDST Patentanwälte

(57) **Zusammenfassung**

Die Erfindung betrifft ein Verfahren zur Anbringung einer Tülle (6), welche mindestens einen Dichtkörper (16, 58) aufweist, an einem sich in einer Axialrichtung (A) erstreckenden Leitungsstrang (4), wobei eine Tülle (6) mit einer Einfüllöffnung (24) und mit mindestens einer Austrittsöffnung (28, 30, 32) sowie mit einem diese strömungstechnisch koppelnden und in die Tülle (6) integrierten Verteilungskanal (26) bereitgestellt wird, wobei die Tülle (6) einen tangential umlaufend abgedichteten Hohlraum (22) aufweist, durch welchen der Leitungsstrang (4) hindurchgeführt ist, wobei ein Dichtmaterial (56) über die Einfüllöffnung (24) in den Verteilungskanal (26) eingefüllt wird, wobei das Dichtmaterial (56) nicht in den Hohlraum (22) eindringt, wobei ein Teil des Dichtmaterials (56) vom Verteilungskanal (26) aus der mindestens einen Austrittsöffnung (28, 30, 32) austritt, und wobei aus diesem Teil des Dichtmaterials (56) der mindestens eine Dichtkörper (16, 58) geformt wird.

## Beschreibung

Die Erfindung betrifft ein Verfahren zur Anbringung einer Tülle, welche einen Dichtkörper aufweist, an einem sich in einer Axialrichtung erstreckenden Leitungsstrang. Die Erfindung betrifft weiterhin eine Vorrichtung aufweisend einen Leitungsstrang und eine daran angebrachte Tülle.

Tüllen werden allgemein zum Abdichten eines Leitungsstrangs bei Wanddurchführungen eingesetzt, d.h. die Tülle ist zusammen mit einem Leitungsstrang in ein Loch in einer Wand eingesetzt und dichtet den Leitungsstrang gegen die Wand ab, sodass Feuchtigkeit nicht durch das Loch von einer zur anderen Seite der Wand hindurchtreten kann. Speziell im Fahrzeugbereich werden Tüllen beispielsweise bei einer Wanddurchführung von einem Nassraum zu einem Trockenraum eingesetzt. Ein wesentlicher Aspekt hierbei ist häufig eine zuverlässige Sicherstellung einer Längsabdichtung (Axialabdichtung).

Tüllen werden regelmäßig durch einen Gießprozess hergestellt, bei dem der Leitungsstrang unter Verwendung einer Gießform von einem Gussmaterial umgeben wird, um einen Tüllenkörper auszubilden. Ein häufig eingesetztes Material hierfür ist beispielsweise Polyurethan (PUR). Dies ist bei der Verarbeitung sehr dünnflüssig, sodass bereits beim Gießen eine Abdichtung der Gießform erforderlich ist. Insbesondere ist eine Längsabdichtung auch beim Gießprozess wünschenswert.

Aus der DE 10 2015 220 318 A1 ist eine Tülle zu entnehmen, welche eine harte Außenschale aus zwei Schalenhälften als Gießform aufweist, welche mit einem Gussmaterial zur Ausbildung eines Tüllenkörpers ausgefüllt ist. Die Außenschale bildet dabei eine bleibende Gießform, welche ein Teil der Tülle ist. Für eine Abdichtung beim Gießprozess sind zusätzliche Dichtelemente vorgesehen, die am Außenumfang des Leitungsstrangs beispielsweise als Dichtstreifen, Dichtband oder auch als Dichtmasse angebracht werden. Hierzu werden sie beispielsweise in die Schalenhälften eingelegt und überlappen sich gegenseitig im zusammengefügten Zustand.

Aus der zum Anmeldezeitpunkt noch unveröffentlichten deutschen Patentanmeldung Nr. 10 2023 201 120.4 ist ein zweistufiges Gussverfahren zur Anbringung der Tülle an einem Leitungsstrang offenbart, bei welchem in einer ersten Stufe ein Dichtelement aus einem ersten Dichtmaterial an den Leitungsstrang angegossen wird, wobei in einer anschließenden zweiten Stufe der eigentliche Tüllenkörper aus einem zweiten Dichtmaterial gegossen wird. Durch die zeitlich vorgelagerte Ausbildung des Dichtelements wird bereits eine Abdichtfunktion erreicht, sodass beim nachfolgenden Gießen des Tüllenkörpers eine Abdichtung für das zweite Dichtmaterial erreicht ist, wodurch dessen Fließen in Längsrichtung durch das Dichtelement zumindest behindert ist.

Der Erfindung liegt die Aufgabe zugrunde, ein besonders geeignetes Verfahren zur Anbringung einer Tülle an einem Leitungsstrang anzugeben. Insbesondere soll eine möglichst zuverlässige und automatisierbare Abdichtung eines Leitungsstrangs bei möglichst geringem Montageaufwand im Rahmen einer Wanddurchführung gewährleistet werden. Der Erfindung liegt weiterhin die Aufgabe zugrunde, eine Vorrichtung mit einem Leitungsstrang und einer daran angebrachten Tülle anzugeben.

Hinsichtlich des Verfahrens wird die Aufgabe mit den Merkmalen des Anspruchs 1 und hinsichtlich der Vorrichtung mit den Merkmalen des Anspruchs 11 erfindungsgemäß gelöst. Vorteilhafte Ausgestaltungen und Weiterbildung sind Gegenstand der abhängigen Ansprüche (Unteransprüche). Die im Hinblick auf das Verfahren angeführten Vorteile und Ausgestaltungen sind sinngemäß auch auf die Vorrichtung übertragbar und umgekehrt.

Das erfindungsgemäße Verfahren ist zur Anbringung einer Tülle, welche mindestens einen Dichtkörper aufweist, an einem sich in einer Axialrichtung erstreckenden Leitungsstrang vorgesehen sowie dafür geeignet und ausgestaltet. Der Leitungsstrang enthält eine oder mehrere Leitungen, insbesondere elektrische Leitungen (z.B. Kabel, Adern), alternativ oder zusätzlich Medienleitungen (z.B. Schläuche), welche zu einem Strang oder Bündel zusammengefasst sind. Beispielsweise ist der Leitungsstrang als ein Kabelstrang, also als ein Strang von mindestens einer elektrischen Leitung, ausgeführt.

Unter "axial" oder einer "Axialrichtung" ist hier und im Folgenden insbesondere eine sich entlang der Längsrichtung oder Längsachse des Leitungsstrangs erstreckende Richtung zu verstehen, welche eine Verlaufsrichtung des Leitungsstrangs von einem Leitungsstrangende zum anderen definiert. Entsprechend wird hier und im Folgenden unter "radial" oder einer "Radialrichtung" insbesondere eine senkrecht (quer) zur Längsachse des Leitungsstrangs orientierte Richtung entlang eines Radius des Leitungsstrangs beziehungsweise der Tülle verstanden. Unter "tangential" oder einer "Tangentialrichtung" wird hier und im Folgenden insbesondere eine Richtung entlang des Umfangs des Leitungsstrangs oder der Tülle (Umfangsrichtung, Azimutalrichtung), also eine Richtung senkrecht zur Axialrichtung und zur Radialrichtung, verstanden.

Verfahrensgemäß wird eine Tülle mit einer Einfüllöffnung und mit zumindest einer Austrittsöffnung sowie mit einem diese strömungstechnisch koppelnden oder verbindenden Verteilungskanal (Führungskanal) bereitgestellt. Der Verteilungskanal ist in die Tülle integriert, also fest in die Struktur der Tülle eingebunden oder einheitlich mit dieser ausgeführt. Die Tülle ist beispielsweise einteilig, also einstückig oder monolithisch, ausgeführt.

Die Tülle weist weiterhin einen tangential umlaufend abgedichteten Hohlraum auf, in welchem der Leitungsstrang einsitzt. Mit anderen Worten ist der Leitungsstrang im zusammengesetzten Zustand der Tülle durch deren Hohlraum konzentrisch oder exzentrisch hindurchgeführt.

Die Austrittsöffnung ist hierbei zu einer dem Hohlraum abgewandten Außenseite der Tülle orientiert. Die Austrittsöffnung ist mit dem Verteilungskanal fluidtechnisch verbunden, so dass ein durch die Einfüllöffnung eingefülltes Dichtmaterial durch den Verteilungskanal strömen und durch die Austrittsöffnung austreten kann.

In einem zweiten Verfahrensschritt wird ein flüssiges Dichtmaterial über die Einfüllöffnung eingefüllt, so dass dieses über den Verteilungskanal zu der mindestens einen Austrittsöffnung fließt und aus dieser austritt. Verfahrensgemäß dringt das Dichtmaterial hierbei nicht in den Hohlraum ein. Dies bedeutet, dass der Hohlraum und der darin einsitzende (einliegende) Leitungsstrang frei von Dichtmaterial bleibt.

In der Folge wird aus dem ausgetretenen Dichtmaterial der mindestens eine Dichtkörper geformt, welcher im verfestigten Zustand die Tülle beziehungsweise den Hohlraum außenseitig tangential geschlossen umläuft.

Durch den tangential geschlossenen oder abgedichteten Hohlraum wird sichergestellt, dass im Zuge des Einfüllens kein Dichtmaterial in den Hohlraum eindringt, so dass der Leitungsstrang vor einem Kontakt mit dem Dichtmaterial geschützt ist. Mit anderen Worten sitzt der Leitungsstrang somit im Wesentlichen lose in der Tülle beziehungsweise in dem Hohlraum ein. Dadurch bleibt eine radiale und/oder axiale Flexibilität des Leitungsstrangs auch nach dem Anbringen der Tülle erhalten, so dass im Betrieb auftretende mechanische Belastungen besser aufgenommen werden können. Weiterhin kann der Leitungsstrang somit ohne Beschädigung oder Zerstörung der Tülle im Zuge von Wartungs-, Reparatur- oder Servicearbeiten ausgetauscht werden.

In einer vorteilhaften Ausführung werden ein erstes Schalenteil und ein zweites Schalenteil bereitgestellt und um den Leitungsstrang herum zu der Tülle zusammengesetzt. Die Tülle ist also mehrteilig, insbesondere zweiteilig ausgebildet. Die Schalenteile sind hierbei beispielsweise als Kunststoffspritzgussteile ausgeführt. Die zusammengesetzten Schalenteile (Tüllenhälften) bilden den tangential umlaufend abgedichteten Hohlraum, in welchem der Leitungsstrang einsitzt. Hierbei ist es beispielsweise denkbar, dass die Schalenteile um den Leitungsstrang herum zusammengesetzt werden. Alternativ können die Schalenteile zunächst zur Tülle gefügt und anschließend der Leitungsstrang in den Hohlraum eingebracht werden.

Die Schalenteile bilden im zusammengesetzten Zustand weiterhin vorzugsweise die Einfüllöffnung und/oder den integrierten Verteilungskanal. Der Verteilungskanal bildet ein Aufnahmevolumen für das eingefüllte Dichtmaterial, welches von beiden Schalenteilen gemeinsam gebildet wird. Dadurch wird durch das in dem Verteilungskanal verbleibende Dichtmaterial auch eine Abdichtung der Schalenteile gegeneinander realisiert.

Die einander zugewandten Schalenflächen der Schalenteile sind nachfolgend auch als Fügeflächen bezeichnet. Die Fügeflächen sind im zusammengesetzten Zustand aneinander anliegend angeordnet. Der Verteilungskanal ist hierbei durch jeweils einen Teilkanal gebildet, welcher als Vertiefung oder Aussparung in die jeweilige Fügefläche eingebracht ist. Vorzugsweise weist jedes Schalenteil hierbei auch eine Hälfte der Einfüllöffnung auf, welche mit dem jeweiligen Teilkanal verbunden ist. Die Teilkanäle und die Einfüllöffnungshälften sind hierbei jeweils zur Fügefläche hin geöffnet, so dass die Teilkanäle und Einfüllöffnungshälften beim Zusammensetzen ineinander münden oder übergehen. Beim Zusammensetzen der Schalenteile bilden die Teilkanäle somit insbesondere ein den Verteilungskanal bildendes Hohlvolumen, welches durch die beispielsweise trichterförmige Einfüllöffnung mit dem Dichtmaterial befüllbar ist.

Vorzugsweise werden die Tülle und der dadurch hindurchgeführte Leitungsstrang zum Einfüllen in eine zumindest die Tülle umschließende Halterung eingesetzt. In einer bevorzugten Ausgestaltung werden die Tülle und der dadurch hindurchgeführte Leitungsstrang insbesondere in eine Gussform eingesetzt. Zwischen der Tülle und der Gussform ist im Bereich der Austrittsöffnung ein insbesondere axialer Freiraum oder Zwischenraum gebildet. Der insbesondere ringförmig verlaufende Zwischenraum verläuft umlaufend an einer dem Hohlraum abgewandten Außenseite der Tülle. Mit anderen Worten bildet der Zwischenraum einen Ringkanal, welcher über die Austrittsöffnung mit dem Verteilungskanal verbunden ist. Der Zwischenraum verläuft hierbei außenseitig tangential umlaufend zum Hohlraum.

Hierbei wird eine ausreichende Menge an Dichtmaterial eingefüllt, so dass der Zwischenraum im Wesentlichen vollständig mit dem Dichtmaterial (auf-)gefüllt wird. In der Folge wird aus dem ausgetretenen Dichtmaterial ein Dichtkörper geformt, welcher im verfestigten Zustand die Tülle beziehungsweise den Hohlraum außenseitig tangential geschlossen umläuft. Durch die insbesondere axiale Anordnung des Zwischenraums zur Tülle wird ein der Tülle axial emporstehender Dichtkörper gebildet, welcher eine zuverlässige Längsabdichtung (Axialabdichtung) gegenüber einer Wand realisiert, wenn die Tülle als Wanddurchführung für den Leitungsstrang verwendet wird. Durch den insbesondere ringförmigen Zwischenraum ist ein tangential geschlossener Dichtkörper realisiert, welcher in einem Einbauzustand weiterhin auch eine radiale Abdichtung der Tülle sicherstellt.

Die Gussform ist beispielsweise aus Polytetrafluoroethylen (PTFE, Teflon) gefertigt oder weist eine entsprechende PTFE-Beschichtung auf. Dadurch wird ein Anhaften des Dichtmaterials oder Dichtkörpers an der Gussform vermieden, so dass zusätzliche Trennmittel entfallen können, wodurch eine besonders einfache und aufwandreduzierte Herstellung des Dichtkörpers ermöglicht ist.

In einer vorteilhaften Ausführung weist die Tülle einen radial verbreiterten Flanschkragen auf. Der Verteilungskanal ist hierbei zumindest teilweise in den Flanschkragen integriert. Mit anderen Worten verläuft der Verteilungskanal zumindest abschnittsweise durch den Flanschkragen der Tülle. Der Verteilungskanal ist somit abschnittsweise radial verlaufend in die Tülle integriert. Die insbesondere radial orientierte Einfüllöffnung ist vorzugsweise an einem Außenrand des Flanschkragens positioniert, so dass diese einfach zugänglich für das Einfüllen des Dichtmaterials ist. Die Austrittsöffnung ist in dieser Ausführung am Flanschkragen angeordnet. Der Zwischenraum ist hierbei insbesondere axial an dem Flanschkragen positioniert, so dass ein dem Flanschkragen axial emporstehender Dichtkörper zur Längsabdichtung gebildet wird.

In einer möglichen Ausgestaltung des Verfahrens wird ein Kabelschutz um den Leitungsstrang, und auf den Anschlussstutzen der Tülle angebracht. Unter einem "Kabelschutz" ist hier und im Folgenden insbesondere ein Schutzelement für den Leitungsstrang zu verstehen, welches den Leitungsstrang vor mechanischen, chemischen oder thermischen Einflüssen schützt. Der Kabelschutz umgibt den Leitungsstrang im angebrachten Zustand tangential umlaufend entlang der Axialrichtung. Durch das Aufbringen des Kabelschutzes wird die Funktion und Lebensdauer des Leitungsstrangs verbessert.

Die Tülle weist beispielsweise einen insbesondere axial orientierten Anschlussstutzen (Tüllenstutzen) auf. Der Anschlussstutzen ist hierbei von dem Hohlraum als zentrale Durchführöffnung durchsetzt. Der etwa röhrenförmige Anschlussstutzen ist insbesondere dazu vorgesehen und eingerichtet axial in eine stirnseitige Öffnung des Kabelschutzes eingeführt oder eingesteckt zu werden. Die dem Kabelschutz zugewandte Außenseite des Anschlussstutzens kann hierbei eine radiale Formgebung, beispielsweise in Form einer Riffelung, aufweisen, um ein axiales Abrutschen des Kabelschutzes zu verhindern und eine sichere form- und/oder kraftschlüssige Verbindung zu gewährleisten.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Unter einem "Formschluss" oder einer "formschlüssigen Verbindung" zwischen wenigstens zwei miteinander verbundenen Teilen wird hier und im Folgenden insbesondere verstanden, dass der Zusammenhalt der miteinander verbundenen Teile zumindest in einer Richtung durch ein unmittelbares Ineinandergreifen von Konturen der Teile selbst oder durch ein mittelbares Ineinandergreifen über ein zusätzliches Verbindungsteil erfolgt. Das "Sperren" einer gegenseitigen Bewegung in dieser Richtung erfolgt also formbedingt.

Unter einem "Kraftschluss" oder einer "kraftschlüssigen Verbindung" zwischen wenigstens zwei miteinander verbundenen Teilen wird hier und im Folgenden insbesondere verstanden, dass die miteinander verbundenen Teile aufgrund einer zwischen ihnen wirkenden Reibkraft gegen ein Abgleiten aneinander gehindert sind. Fehlt eine diese Reibkraft hervorrufende "Verbindungskraft" (dies bedeutet diejenige Kraft, welche die Teile gegeneinander drückt, beispielsweise eine Schraubenkraft oder die Gewichtskraft selbst), kann die kraftschlüssige Verbindung nicht aufrecht erhalten und somit gelöst werden.

In einer zweckmäßigen Weiterbildung erstreckt sich der Verteilungskanal in den Anschlussstutzen. Dies bedeutet, dass der Verteilungskanal abschnittsweise axial entlang des Anschlussstutzens, also parallel zum Hohlraum, geführt ist. Dies stellt eine Abdichtung des Hohlraums im Bereich der Fügeflächen der zusammengesetzten Schalenteile sicher.

Ein zusätzlicher oder weiter Aspekt der Erfindung sieht vor, dass der Anschlussstutzen im Bereich des aufgebrachten Kabelschutzes die mit dem Verteilungskanal verbundene Austrittsöffnung aufweist. Die Austrittsöffnung ist hierbei radial und/oder axial nach außen orientiert, also in eine vom Hohlraum abgewandte Richtung, geöffnet. Verfahrensgemäß tritt in dieser Ausführung ein Teil des eingefüllten Dichtmaterials vom Verteilungskanal in Richtung des aufgebrachten Kabelschutzes aus, und bildet oder formt hierbei den Dichtkörper. Dadurch wird eine Abdichtung in Richtung des Kabelschutzes realisiert.

Bevorzugterweise wird der Kabelschutz vor dem Einfüllen des Dichtmaterials von außen auf den Anschlussstutzen aufgebracht beziehungsweise der Anschlussstutzen in den Kabelschutz eingeführt, so dass das durch die Austrittsöffnung austretende Dichtmaterial beziehungsweise der Dichtkörper eine Abdichtung von innen her gegen den Kabelschutz realisiert.

Die Tülle weist in deiner denkbaren Ausführungsform zwei Austrittsöffnungen für den Verteilungskanal auf, wobei eine erste Austrittsöffnung beispielsweise am Flansch und eine zweite Austrittsöffnung am Anschlussstutzen angeordnet ist.

Somit wird durch ein gezieltes Austreten des Dichtmaterials durch die definierten ersten und zweiten Austrittsöffnungen der Tülle zum einen eine externe Dichtung gegenüber einer Durchtrittswand der Tülle (Dichtkörper) generiert und zum anderen eine interne Abdichtung zwischen der Tülle und dem Kabelschutz sicherstellt. Hierbei ist es beispielsweise denkbar, dass durch den Kontakt von Dichtmaterial und Kabelschutz nicht lediglich eine Abdichtung, sondern auch eine, insbesondere stoffschlüssige, Befestigung des Kabelschutzes an der Tülle realisiert wird.

Unter einem "Stoffschluss" oder einer "stoffschlüssigen Verbindung" zwischen wenigstens zwei miteinander verbundenen Teilen wird hier und im Folgenden insbesondere verstanden, dass die miteinander verbundenen Teile an Ihren Kontaktflächen durch stoffliche Vereinigung oder Vernetzung (beispielsweise aufgrund von atomaren oder molekularen Bindungskräften) gegebenenfalls unter Wirkung eines Zusatzstoffs zusammengehalten werden.

Die Tülle weist somit eine Austrittsöffnung auf, welche im Zuge des Verfahrens insbesondere derart positioniert wird, dass die Austrittsöffnung in einen Hohlraum, also in ein definiertes Hohlvolumen, mündet, wobei das aus der Austrittsöffnung in den Hohlraum einströmende Dichtmaterial in der Folge den Dichtkörper bildet. Der Hohlraum formt somit das Dichtmaterial. Der Hohlraum kann hierbei beispielsweise der Zwischenraum zwischen der Tülle und der Gussform und/oder ein Ringraum zwischen dem Anschlussstutzen und einem darauf aufgebrachten Kabelschutz sein.

In einer zweckmäßigen Ausführung ist der Kabelschutz an einer Komponente angeschlossen, wobei der Leitungsstrang in der Komponente geführt ist. Die Komponente ist vorzugsweise eine elektrische Komponente, wie beispielsweise ein Steckverbinder oder ein Steuergerät. Die Komponente kann jedoch auch ein nicht-elektronisches Bauteil, wie beispielsweise eine Gehäusekomponente sein. Zur Befestigung des Kabelschutzes ist vorzugsweise ein entsprechender Anschlussstutzen an der Komponente vorgesehen. Der Leitungsstrang ist hierbei beispielsweise lose und/oder unmittelbar in der Komponente geführt. Vorzugsweise ist auch im Bereich der Komponente kein Dichtmaterial an oder auf dem Leitungsstrang aufgebracht.

Der Kabelschutz kann beispielsweise als ein Schutzschlauch, Wellrohr, Kabelkanal, Ummantelung aus widerstandsfähigen Material, längsgeschweißte Schrumpffolie (engl.: longitudinally welded heat shrink foil), Kabelummantelung mit Schlitz (engl.: split cable protector), oder geteilte Kabelummantelung mit Geflecht (engl.: flexible split braided cable sleeve) ausgeführt sein. Im Falle einer beispielsweise aus einem Kunststoff hergestellten Kabelummantelung mit Schlitz (beispielsweise eine Plastikfolie) ist es notwendig dessen Teile nach der Platzierung um den Leitungsstrang herum miteinander stoffschlüssig zu fügen, beispielsweise zu verkleben oder zu verschweißen.

In einer bevorzugten Ausgestaltung wird ein Schrumpfschlauch (engl.: heat shrink tube) als Kabelschutz verwendet. Dadurch ist eine besonders einfaches und aufwandsreduziertes Aufbringen des Kabelschutzes ermöglicht. Der insbesondere flexible Schrumpfschlauch wird auf den Leitungsstrang und auf den Anschlussstutzen aufgebracht und anschließend derart thermisch behandelt, dass dessen Innendurchmesser schrumpft, und somit form- und/oder kraftschlüssig von außen auf dem Anschlussstutzen fixiert wird. Bevorzugt werden der Durchmesser und der Schrumpffaktor des Kabelschutzes beziehungsweise Schrumpfschlauchs so gewählt, dass der Kabelschutz ohne Streckung über einen bereits montierten Steckverbinder (Stecker) des Leitungsstrangs gezogen werden kann. Der Kabelschutz weist hierbei vor der Behandlung auch ein axiales Übermaß zur Berücksichtigung eines Längsschrumpfs auf. Somit kann für das Verfahren ein stecker-konfektionierter Kabelstrang als Leitungsstrang verwendet werden. Sobald sich während der Montage der Kabelschutz zwischen dem Steckverbinder und der Tülle befindet, erfolgt vorzugsweise ein Schrumpfen des Schrumpfschlauchs auf den entsprechenden Anschlussstutzen des Steckverbinders und/oder der Tülle, so dass ein zuverlässiger und betriebssicherer Schutz des Leitungsstrangs zwischen dem Steckverbinder und der Tülle realisiert wird.

**In** einer zweckmäßigen Ausbildungsform wird als Dichtmaterial ein thermoplastisches Polymer verwendet. Bevorzugterweise wird ein Polyurethan (PUR oder PU), insbesondere ein geschäumtes Polyurethan (PUR-Schaum) verwendet. Das verwendete Polyurethan ist beim Einfüllen besonders dünnflüssig, so dass eine einfache Verteilung im Verteilungskanal sowie ein leichtes Ausströmen und (Auf-)-Füllen des Zwischenraums ermöglicht ist. Der abgedichtete Hohlraum stellt hierbei sicher, dass kein Polyurethan in den Bauraum des Leitungsstrangs eindringen kann. Bei einer Ausführung mit einer (zweiten) Austrittsöffnung am Anschlussstutzen wird der Leitungsstrang durch die Abdichtung über den Kabelschutz und dessen Abdichtung vor dem Polyurethan geschützt.

In einer denkbaren Ausführungsform sind die beiden Schalenteile aus einem Kunststoff oder aus einem Hartgummi gefertigt. Insbesondere sind das erste und zweite Schalenteil als Spritzgussteile hergestellt, so dass eine einfache und kostengünstige Herstellung der Tülle ermöglicht ist.

In einer vorteilhaften Weiterbildung werden die beiden Schalenteile beim Zusammensetzen der Tülle form- und/oder kraftschlüssig miteinander gefügt. Dadurch ist eine einfache und zuverlässige Verbindung der Schalenteile ermöglicht.

Die Schalenteile werden beispielsweise miteinander verrastet oder verklipst. Vorzugsweise werden die Schalenteile miteinander steckverbunden, insbesondere nach Art einer Nut-Federverbindung. Die Fügeflächen der Schalenteile weisen hierbei entsprechende Steckkonturen beziehungsweise Nut-Federkonturen auf, welche beim Zusammensetzen ineinandergesteckt werden. Die Steckkonturen wirken hierbei auch als eine Positionierungs- oder Ausrichtungshilfe beim Zusammensetzen der Schalenteile, so dass eine Montage der Tülle vereinfacht wird.

Die erfindungsgemäße Vorrichtung weist einen Leitungsstrang und eine daran angebrachte Tülle auf. Die Tülle ist hierbei vorzugsweise nach einem vorstehend beschriebenen Verfahren auf den Leitungsstrang angebracht. Der Leitungsstrang erstreckt sich hierbei entlang einer Axialrichtung, wobei die Tülle einen Dichtkörper aufweist.

Die Tülle weist einen tangential umlaufend abgedichteten Hohlraum auf, durch welchen der Leitungsstrang hindurchgeführt ist. Die Tülle weist weiterhin eine Einfüllöffnung und einen damit verbundenen, integrierten Verteilungskanal auf. In den Verteilungskanal ist ein Dichtmaterial eingefüllt. Der Verteilungskanal weist mindestens eine Austrittsöffnung auf, durch welche ein Teil des Dichtmaterials aus dem Verteilungskanal als Dichtkörper austritt, welcher die Tülle und/oder den Hohlraum außenseitig umläuft.

In einer vorteilhaften Ausgestaltung ist die Tülle mehrteilig, insbesondere zweiteilig, mit zwei Schalenteilen ausgeführt. Die Schalenteile sind um den Leitungsstrang herum zu der Tülle zusammengesetzt, und bilden dabei einen tangential umlaufend abgedichteten Hohlraum aus, durch welchen der Leitungsstrang hindurchgeführt ist.

In einer denkbaren Ausführung ist der Leitungsstrang in einer Komponente geführt. Die Komponente ist vorzugsweise eine elektrische Komponente, wie beispielsweise ein Steckverbinder oder ein Steuergerät. Die Komponente kann jedoch auch ein nicht-elektronisches Bauteil, wie beispielsweise eine Gehäusekomponente sein. Der Leitungsstrang ist hierbei beispielsweise lose und/oder unmittelbar in der Komponente geführt. Vorzugsweise ist auch im Bereich der Komponente kein Dichtmaterial an oder auf dem Leitungsstrang aufgebracht.

In einer bevorzugten Ausführungsform weist der Leitungsstrang einen Steckverbinder auf. Insbesondere ist der Leitungsstrang als ein stecker-konfektionierter Kabelstrang ausgeführt, wobei der Steckverbinder eine elektrische (Steck-)Kontaktierung der elektrischen Leitungen (Kabel) mit einem Gegenstecker ermöglicht. Dadurch ist eine einfache Kontaktierung des Leitungsstrangs, beispielsweise an ein Fahrzeug-Bordnetz, ermöglicht.

In einer denkbaren Weiterbildung ist der Verteilungskanal zumindest teilweise in einen Flanschkragen der Tülle integriert, wobei die (erste) Austrittsöffnung am Flanschkragen angeordnet ist. Dies bedeutet, dass der (erste) Dichtkörper am Flanschkragen positioniert ist. Der Dichtkörper steht dem radial verbreiterten Flanschkragen hierbei insbesondere in axialer Richtung empor. Bei einer Anwendung der Vorrichtung als Wanddurchführung ist somit durch den Dichtkörper eine zuverlässige Axial- und Radialabdichtung ermöglicht.

Zum Schutz des Leitungsstrangs ist es in einer vorteilhaften Ausführung vorgesehen, dass ein Kabelschutz um den Leitungsstrang, und auf einen axialen Anschlussstutzen der Tülle angebracht ist. Der Kabelschutz erstreckt sich hierbei vorzugsweise von dem Steckverbinder bis zur Tülle, so dass der Leitungsstrang im Einbauzustand zuverlässig vor äußeren Einflüssen geschützt ist.

In einer zweckmäßigen Ausgestaltung erstreckt sich der Verteilungskanal zumindest teilweise in den axialen Anschlussstutzen. In einer vorteilhaften Weiterbildung weist der Anschlussstutzen im Bereich des aufgebrachten Kabelschutzes die mit dem Verteilungskanal verbundene (zweite) Austrittsöffnung auf, durch welche eine Abdichtung des Kabelschutzes zur Tülle beziehungsweise zum Anschlussstutzen realisiert ist. Die (zweite) Austrittsöffnung mündet beispielsweise in eine tangential umlaufende Ringnut, in welche das Dichtmaterial ausgetreten ist, und somit den (zweiten) Dichtkörper radiale Abdichtung zum Kabelschutz bildet.

In einer möglichen Ausbildung ist der Kabelschutz auf einen (Anschluss-)Stutzen der Komponente, insbesondere auf einen Stutzen des Steckverbinders, angebracht. Der Kabelschutz ist also an den gegenüberliegenden Stirnseiten jeweils mit einem Anschlussstutzen der Tülle und der Komponente gefügt, so dass der Leitungsstrang zwischen Tülle und Komponente zuverlässig und sicher geschützt ist.

In einer geeigneten Ausführung sind die Schalenteile der Tülle form- und/oder kraftschlüssig miteinander gefügt. Beispielsweise sind die Schalenteile im zusammengesetzten Zustand durch eine Nut-Federverbindung miteinander verbunden, so dass eine stabile Tülle mit einem dichten Hohlraum realisiert ist, und so dass beim Einfüllen des Dichtmaterials kein Dichtmaterial in den Hohlraum eindringen kann.

Nachfolgend ist die Erfindung anhand einer Zeichnung näher erläutert. Darin zeigen:
- Fig. 1: in perspektivischer Darstellung einer Vorrichtung, welche eine Tülle mit einem Dichtkörper und einen Leitungsstrang aufweist,
- Fig. 2: in perspektivischer Darstellung die Tülle mit dem Dichtkörper,
- Fig. 3a, 3b: in perspektivischen Darstellungen jeweils ein Schalenteil der Tülle, und
- Fig. 4: in einer Schnittdarstellung ausschnittsweise die Vorrichtung und eine Gussform.

Einander entsprechende Teile und Größen sind in allen Figuren stets mit den gleichen Bezugszeichen versehen.

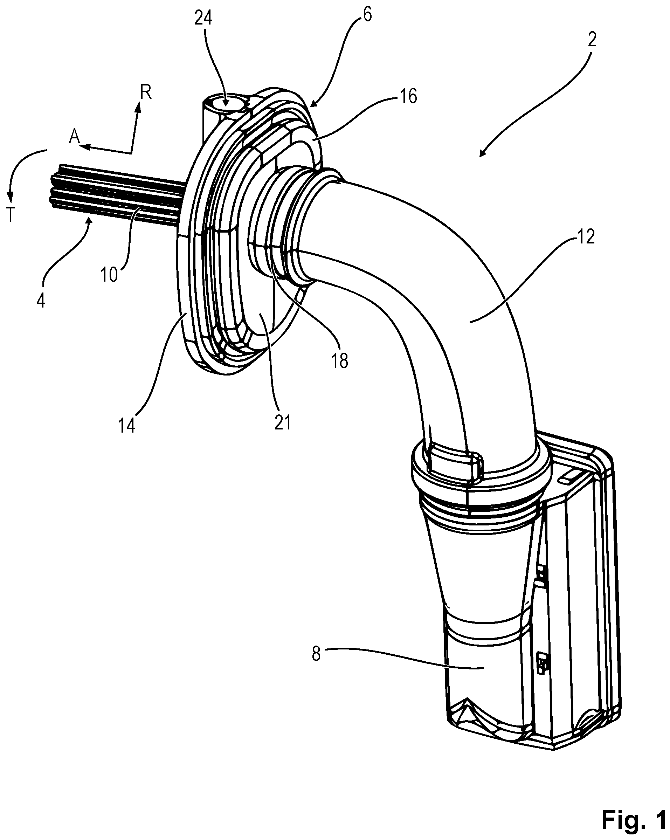

Die Fig. 1 zeigt eine Vorrichtung 2 für eine Wanddurchführung in einem Kraftfahrzeug, beispielsweise im Bereich eines Armaturenbretts (Dashboard). Die Vorrichtung 2 weist einen Leitungsstrang 4 und eine Tülle 6 auf. Der Leitungsstrang 4 weist zur Kontaktierung mit einem Fahrzeugbordnetz einen konfektionierten Steckverbinder 8 auf, welcher an einem Ende des Leitungsstrangs 4 angeordnet ist.

Im Nachfolgenden sind Angaben hinsichtlich der Raumrichtungen für die Vorrichtung 2 auch insbesondere bezüglich des Verlaufs des Leitungsstrangs 4 angegeben. Eine Axialrichtung A ist hierbei entlang einer Längsrichtung des Leitungsstrangs 4 und eine Radialrichtung R entlang einer Querrichtung des Leitungsstrangs 4 sowie eine Tangentialrichtung T entlang einer Umfangsrichtung des Leitungsstrangs 4 orientiert.

Der Leitungsstrang 4 erstreckt sich entlang der Axialrichtung A und weist mehrere Einzelleitungen 10 auf, welche in dem gezeigten Ausführungsbeispiel konzentrisch in mehreren Lagen angeordnet sind und ein Leitungsbündel bilden. Bei dem Leitungsstrang 4 handelt es sich insbesondere um ein elektrisches Kabel und bei den Einzelleitungen 10 handelt es sich um elektrische Leitungen. Die Einzelleitungen 10 sind in den Figuren lediglich beispielhaft mit Bezugszeichen versehen.

Um den Leitungsstrang 4 ist die Tülle 6 angebracht, welche axial beabstandet zu dem Steckverbinder 8 angeordnet ist. Zwischen dem Steckverbinder 8 und der Tülle 6 ist ein Kabelschutz 12 auf den Leitungsstrang 4 aufgebracht.

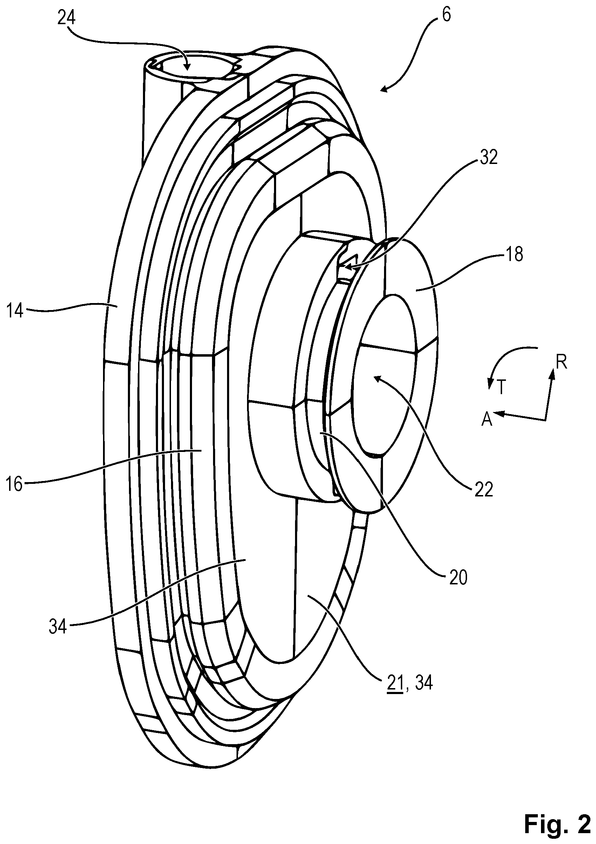

Die in Fig. 2 einzeln dargestellte Tülle 6 ist zur abgedichteten Durchführung des Leitungsstrangs 4 durch eine Durchgangsöffnung in einer Wand ausgeführt. Die Tülle 6 weist hierbei einen radialen Flanschkragen (Ringkragen) 14 auf, welcher im Einbauzustand gegen einen Rand der Durchgangsöffnung gedrückt wird. Zur axialen Abdichtung gegenüber der Durchgangsöffnung ist ein (erster) Dichtungskörper 16 an der Tülle 6 befestigt, welcher dem Flanschkragen 14 in axialer Richtung emporsteht.

Die Tülle 6 weist weiterhin einen Anschlussstutzen (Tüllenstutzen) 18 auf, an welchem der Kabelschutz 12 befestigbar ist. Vorzugsweise weist der Steckverbinder 8 einen nicht näher gezeigten Anschlussstutzen auf, an welchem der Kabelschutz 12 gegenüberliegend zur Tülle 6 befestigt ist.

Der Anschlussstutzen 18 ist im Montagezustand axial in eine stirnseitige Öffnung des Kabelschutzes 12 eingeführt oder eingesteckt. Der Anschlussstutzen 18 ist hierbei axial emporstehend an den Flanschkragen 14 angeformt, und weist an einer dem Kabelschutz 12 zugewandten Freiende eine umlaufende Ringnut 20 zur Halterung des Kabelschutzes 12 auf.

Im Übergangsbereich vom Anschlussstutzen 18 zum Flanschkragen 14 ist eine Schulter 21 als radialer und axialer Versatz oder Absatz der Tülle 6 angeordnet. Der etwa ringförmige Dichtkörper 16 ist an der axial verlaufenden Umfangswand der Schulter 21 positioniert.

Der Anschlussstutzen 18, die Schulter 21 und der Flanschkragen 14 sind von einer axialen Durchgangsöffnung in Form eines zylindrischen Hohlraums 22 durchsetzt. Der Hohlraum 22 ist tangential umlaufend geschlossen und abgedichtet, und ist lediglich an den stirnseitigen Öffnungen geöffnet. Im Montagezustand ist der Leitungsstrang 4 durch den Hohlraum 22 geführt. Der Hohlraum 22 beziehungsweise der Anschlussstutzen 18 ist radial außenseitig von dem tangential geschlossen, etwa ringförmigen, Dichtkörper 16 eingefasst.

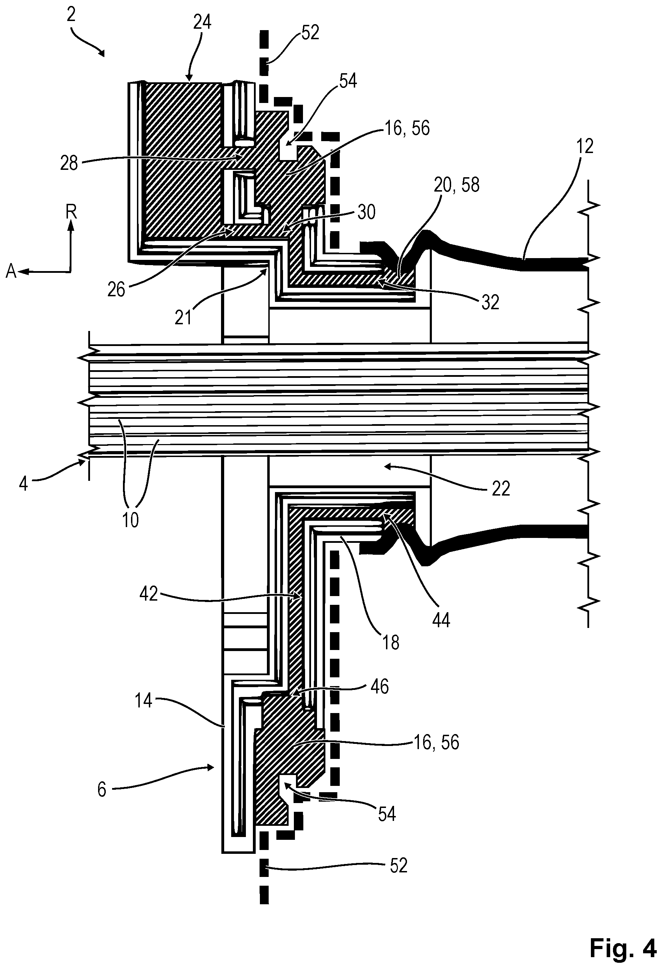

Die Tülle 6 weist im Bereich des Flanschkragens 14 eine radial geöffnete Einfüllöffnung 24 auf, welche in einen integrierten (ersten) Verteilungskanal 26 (Fig. 4) mündet. Der Verteilungskanal 26 ist hierbei in dem Flanschkragen 14 und in die Schulter 21 sowie optional auch in den Anschlussstutzen 18 integriert. Mit anderen Worten erstreckt sich der Verteilungskanal 26 zumindest abschnittsweise in den Flanschkragen 14 und in die Schulter 21 sowie vorzugsweise in den Anschlussstutzen 18.

Der Verteilungskanal 26 verläuft ausgehend von der Einfüllöffnung 24 im Wesentlichen radial im Flanschkragen 14 und ist anschließend axial entlang der Schulter 21 geführt. In dem gezeigten Ausführungsbeispiel ist der Verteilungskanal 26 weiterhin über den radialen Versatz der Schulter 21 axial entlang des Anschlussstutzens 18 geführt. Der Verteilungskanal 26 erstreckt sich hierbei bis zu der Ringnut 20.

Der Verteilungskanal 26 ist durch eine axiale Austrittsöffnung 28 im Flanschkragen 14 und durch eine radiale Austrittsöffnung 30 im Bereich der Schulter 21 zu dem Dichtkörper 16 hin geöffnet. In der gezeigten Ausführung ist der Verteilungskanal 26 zusätzlich über eine radiale und/oder axiale Austrittsöffnung 32 zur Ringnut 20 hin geöffnet.

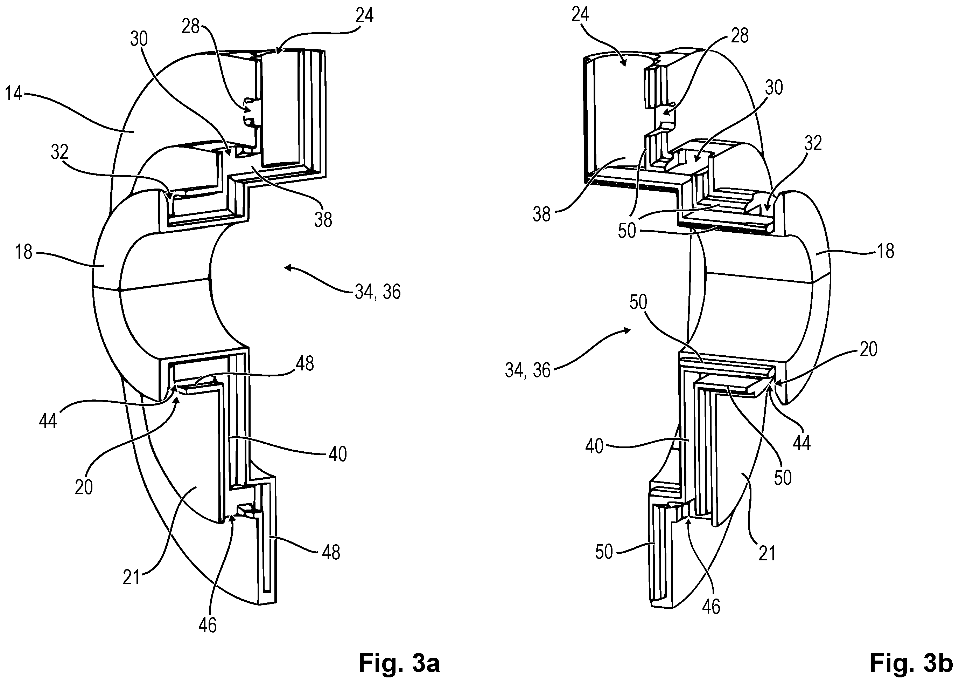

Die Tülle 6 ist in diesem Ausführungsbeispiel mehrteilig, insbesondere zweiteilig, ausgeführt, und weist zwei zusammengesetzte oder zusammensetzbare Schalenteile (Tüllenhälften) 34 auf. Die in den Figuren 3a und 3b einzeln gezeigten Schalenteile 34 sind beispielsweise als Hartgummi-Formteile oder vorzugsweise als Kunststoffspritzgussteile ausgeführt.

Die Schalenteile 34 sind an einer jeweiligen Fügefläche (Füge-Schnittstelle) 36 zu der Tülle 6 zusammensetzbar. Wie in der perspektivischen Darstellung der Fig. 3a und Fig. 3b vergleichsweise deutlich ersichtlich ist, sind in die Fügefläche 36 sicken- oder nutenartige Vertiefungen oder Aussparungen eingebracht.

Die Vertiefungen bilden in einer bezogen auf die Darstellungen der Fig. 3a und Fig. 3b oberen Hälfte der Schalenteile 34 jeweils einen Teilkanal 38, welche im zusammengesetzten Fügezustand der Schalenteile 34 die Einfüllöffnung 24 und den integrierten Verteilungskanal 26 der Tülle 6 bilden. **In** einer bezogen auf die Darstellungen der Fig. 3a und Fig. 3b unteren Hälfte der Schalenteile 34 ist jeweils ein weiterer Teilkanal 40 durch die Vertiefungen gebildet, welche im zusammengesetzten Fügezustand der Schalenteile einen zweiten integrierten Verteilungskanal 42 (Fig. 4) der Tülle 6 bilden.

Die Teilkanäle 40 erstrecken sich jeweils axial entlang der Hälfte des Anschlussstutzens 18 und über den axialen und radialen Versatz der Hälfte der Schulter 21. Die Teilkanäle 40 beziehungsweise der dadurch gebildete Verteilungskanal 42 ist durch zwei Eintrittsöffnungen 44, 46 nach außen geöffnet. Die radiale und/oder axiale Eintrittsöffnung 44 mündet in die Ringnut 20, und ist im Wesentlichen diametral gegenüberliegend zu der Austrittsöffnung 32 angeordnet. Die radiale Eintrittsöffnung 46 ist im Bereich der Schulter 21 positioniert, und ist im Wesentlichen diametral gegenüberliegend zu der Austrittsöffnung 30 angeordnet.

Die Schalenteile 34 sind im zusammengesetzten Zustand der Tülle 6 form- und/oder kraftschlüssig miteinander gefügt. Die Schalenteile 34 sind in dem gezeigten Ausführungsbeispiel durch eine als Nut-Federverbindung ausgeführte Steckverbindung miteinander fügbar. Hierzu weist das in Fig. 3a gezeigte Schalenteil 34 nutenartige Fügeaufnahmen 48 auf, in welche steg- oder federartige Fügefortsätze 50 des in Fig. 3b gezeigten Schalenteils 36 eingreifen. Die Fügeaufnahmen 48 sind hierbei beispielsweise zumindest teilweise in die Teilkanäle 38, 40 integriert. Die Fügeaufnahmen 48 und Fügefortsätze 50 sind im Bereich der Teilkanäle 38, 40 einstückig an das jeweilige Schalenteil 34 angeformt, und sind in den Figuren lediglich beispielhaft mit Bezugszeichen versehen.

Nachfolgend ist anhand der Fig. 4 ein Verfahren zum Anbringen der Tülle 6 an dem Leitungsstrang 4 näher erläutert.

Verfahrensgemäß werden die Schalenteile 34 bereitgestellt und in einem ersten Verfahrensschritt an einer gewünschten axialen Position um den Leitungsstrang 4 herum zu der Tülle 6 zusammengesetzt. Die zusammengesetzten Schalenteile 34 bilden den tangential umlaufend abgedichteten Hohlraum 22, in welchem der Leitungsstrang 4 einsitzt.

In dem gezeigten Ausführungsbeispiel wird anschließend der Kabelschutz 12 auf den Anschlussstutzen 18 aufgebracht. Der Kabelschutz 12 ist in dieser Ausführungsform als ein Schrumpfschlauch ausgeführt. Der Kabelschutz 12 wird auf den Leitungsstrang 4 und auf den Anschlussstutzen 18 aufgebracht und anschließend derart thermisch behandelt, dass dessen Innendurchmesser schrumpft, und somit form- und/oder kraftschlüssig von außen auf dem Anschlussstutzen 18 fixiert wird.

Wie in der Fig. 4 vergleichsweise deutlich ersichtlich ist, schrumpft der Kabelschutz 12 zumindest teilweise in die Ringnut 20 des Anschlussstutzens 18 hinein, so dass in Axialrichtung A eine form- und/oder kraftschlüssige Halterung des Kabelschutzes 12 am Anschlussstutzen 18 realisiert ist. Der Kabelschutz 12 ist hierbei derart auf den Anschlussstutzen 18 aufgebracht, dass die Austrittsöffnung 32 und die Eintrittsöffnung 44 von dem Kabelschutz 12 übergriffen beziehungsweise von diesem abgedeckt sind.

In einem darauffolgenden Verfahrensschritt werden die Tülle 6 und der dadurch hindurchgeführte Leitungsstrang 4 in eine zumindest die Tülle 6 umschließende Gussform 52 eingesetzt. Die Gussform 52 ist in der Fig. 4 lediglich schematisch und vereinfacht durch strichlinierte Konturen dargestellt. In einer alternativen Ausführung ist es beispielsweise denkbar, dass die Tülle 6 beim Aufbringen des Kabelschutzes 12 bereits in die Gussform 52 eingesetzt ist.

Zwischen der Tülle 6 und der Gussform 52 ist ein axialer Freiraum oder Zwischenraum 54 gebildet, welcher sich ringförmig um den Außenumfang der Schulter 21 erstreckt. Der radial außenseitig zum Anschlussstutzen 18 angeordnete Zwischenraum 54 fasst diesen somit tangential umlaufend ein. Wenn die Tülle 6 in der Gussform 52 einsitzt, münden die Austrittsöffnungen 28 und 30 sowie die Eintrittsöffnung 46 in den Zwischenraum 54, so dass ein Ringkanal gebildet ist, die Verteilungskanäle 26 und 42 fluidtechnisch miteinander verbindet.

In einem darauffolgenden Verfahrensschritt wird ein flüssiges Dichtmaterial 56 über die Einfüllöffnung 24 eingefüllt. Das Dichtmaterial 56 ist ein thermoplastisches Polymer, insbesondere ein Polyurethan (PUR oder PU). Das Dichtmaterial 56 weist beispielsweise eine wässrige Konsistenz oder Viskosität auf, so dass sich dieses beim Einfüllen problemlos in dem Kanalsystem der Tülle 6 verteilt. Je nach Art des Dichtmaterials 56 kann dieses auch aufschäumen, so dass der resultierende Dichtkörper 16 beispielsweise aus PUR-Schaum gebildet ist.

Das flüssige Dichtmaterial 56 strömt durch den Verteilungskanal 26 und tritt einerseits an den Austrittsöffnungen 28 und 30 in den Zwischenraum 54, und andererseits über die Austrittsöffnung 32 in die Ringnut 20 aus. Aufgrund des aufgebrachten Kabelschutzes 12 ist die Ringnut 20 nach außen hin abgedichtet, so dass sich das Dichtmaterial 56 in dem zwischen der Ringnut 20 und dem Kabelschutz 12 gebildeten Hohlraum verteilt. Das Dichtmaterial 56 fließt durch den Zwischenraum 54 und/oder die Ringnut 20 zu den Eintrittsöffnungen 44 und 46. Somit fließt das Dichtmaterial 56 beim Einfüllen von dem Verteilungskanal 26 in den Verteilungskanal 42. Das durch die Verteilungskanäle 26, 44 gebildete Hohlvolumen der Tülle 6 und der mit der Gussform 52 gebildete Zwischenraum 54 wird somit mit dem Dichtmaterial 56 aufgefüllt. Mit anderen Worten tritt das Dichtmaterial 56 nicht in den Hohlraum 22 ein, so dass der Hohlraum 22, und somit der darin einsitzende Leitungsstrang 4, frei von Dichtmaterial 56 bleibt.

Anschließend wird das Dichtmaterial 56 verfestigt (ausgehärtet, geschäumt). Die sich im Zwischenraum ausbildende Dichtungswulst bildet den Dichtkörper 16, wobei das Dichtmaterial 56 in der Ringnut 20 einen Dichtkörper 58 als radiale Abdichtung zum Kabelschutz 12 realisiert.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

So kann der Kabelschutz 12 alternativ beispielsweise als ein Schutzschlauch, Wellrohr, Kabelkanal, Ummantelung aus widerstandsfähigen Material, längsgeschweißte Schrumpffolie (engl.: longitudinally welded heat shrink foil), Kabelummantelung mit Schlitz (engl.: split cable protector), oder geteilte Kabelummantelung mit Geflecht (engl.: flexible split braided cable sleeve) ausgeführt sein.

Weiterhin kann die Vorrichtung 2 anstelle eines Steckverbinders 8 auch eine andere Komponente, wie beispielsweise eine Gehäuse oder eine Steuereinheit (Steuergerät), aufweisen.

Weiterhin ist die Tülle 6 für sich allein erfinderisch und stellt somit eine eigene Erfindung dar.

### Bezugszeichenliste

- 2: Vorrichtung
- 4: Leitungsstrang
- 6: Tülle
- 8: Steckverbinder
- 10: Einzelleitung
- 12: Kabelschutz
- 14: Flanschkragen
- 16: Dichtkörper
- 18: Anschlussstutzen
- 20: Ringnut
- 21: Schulter
- 22: Hohlraum
- 24: Einfüllöffnung
- 26: Verteilungskanal
- 28: Austrittsöffnung
- 30: Austrittsöffnung
- 32: Austrittsöffnung
- 34: Schalenteil
- 36: Fügefläche
- 38: Teilkanal
- 40: Teilkanal
- 42: Verteilungskanal
- 44: Eintrittsöffnung
- 46: Eintrittsöffnung
- 48: Fügeaufnahme
- 50: Fügefortsatz
- 52: Gussform
- 54: Zwischenraum
- 56: Dichtmaterial
- 58: Dichtkörper
- A: Axialrichtung
- R: Radialrichtung
- T: Tangentialrichtung

## Patentansprüche

1. Verfahren zur Anbringung einer Tülle (6), welche mindestens einen Dichtkörper (16, 58) aufweist, an einem sich in einer Axialrichtung (A) erstreckenden Leitungsstrang (4),
- wobei eine Tülle (6) mit einer Einfüllöffnung (24) und mit mindestens einer Austrittsöffnung (28, 30, 32) sowie mit einem diese strömungstechnisch koppelnden und in die Tülle (6) integrierten Verteilungskanal (26) bereitgestellt wird,
- wobei die Tülle (6) einen tangential umlaufend abgedichteten Hohlraum (22) aufweist, durch welchen der Leitungsstrang (4) hindurchgeführt ist,
- wobei ein Dichtmaterial (56) über die Einfüllöffnung (24) in den Verteilungskanal (26) eingefüllt wird,
- wobei das Dichtmaterial (56) nicht in den Hohlraum (22) eindringt,
- wobei ein Teil des Dichtmaterials (56) vom Verteilungskanal (26) aus der mindestens einen Austrittsöffnung (28, 30, 32) austritt, und wobei aus diesem Teil des Dichtmaterials (56) der mindestens eine Dichtkörper (16, 58) geformt wird.

2. Verfahren nach Anspruch 1, wobei ein erstes Schalenteil (34) und ein zweites Schalenteil (34) um den Leitungsstrang (4) herum zu der Tülle (6) zusammengesetzt werden, und dabei den tangential umlaufend abgedichteten Hohlraum (22) bilden.

3. Verfahren nach Anspruch 1 oder 2,
- wobei die Tülle (6) und der dadurch hindurchgeführte Leitungsstrang (4) in eine die Tülle (6) umschließende Gussform (52) eingesetzt werden, und
- wobei die Austrittsöffnung (28, 30) in einen zwischen der Tülle (6) und der Gussform (52) gebildeten Zwischenraum (54) austritt, und wobei aus diesem Teil des Dichtmaterials (56) der Dichtkörper (16) geformt wird, welcher die Tülle (6) außenseitig umläuft.

4. Verfahren nach einem der Ansprüche 1 bis 3, wobei die Tülle (6) einen Flanschkragen (14) aufweist, wobei der Verteilungskanal (26) zumindest teilweise in den Flanschkragen (14) integriert ist, und wobei die Austrittsöffnung (28) am Flanschkragen (14) angeordnet ist.

5. Verfahren nach einem der Ansprüche 1 bis 4, wobei ein Kabelschutz (12) um den Leitungsstrang (4), und auf einen Anschlussstutzen (18) der Tülle (6) angebracht wird.

6. Verfahren nach Anspruch 5, wobei sich der Verteilungskanal (26) in den Anschlussstutzen (18) erstreckt.

7. Verfahren nach Anspruch 5 oder 6, wobei die Austrittsöffnung (32) am Anschlussstutzen (18) im Bereich des aufgebrachten Kabelschutzes (12) angeordnet ist, durch welche ein Teil des Dichtmaterials (56) vom Verteilungskanal (26) in Richtung des aufgebrachten Kabelschutzes (12) austritt und den Dichtkörper (58) formt.

8. Verfahren nach einem der Ansprüche 5 bis 7, wobei der Kabelschutz (12) an einer Komponente, insbesondere an einer elektrischen Komponente, vorzugsweise an einem Steckverbinder (8), angeschlossen ist, und wobei der Leitungsstrang (4) in der Komponente geführt ist.

9. Verfahren nach einem der Ansprüche 5 bis 8, wobei als Kabelschutz (12) ein Schrumpfschlauch verwendet wird.

10. Verfahren nach einem der Ansprüche 2 bis 9, wobei die beiden Schalenteile (34) form- und/oder kraftschlüssig miteinander gefügt werden.

11. Vorrichtung (2) aufweisend einen Leitungsstrang (4) und eine daran angebrachte Tülle (6), insbesondere angebracht nach einem Verfahren gemäß einem der Ansprüche 1 bis 10,
- wobei die Tülle (6) eine Einfüllöffnung (24) und mindestens eine Austrittsöffnung (28, 30, 32) sowie einen diese strömungstechnisch koppelnden und in der Tülle (6) integrierten Verteilungskanal (26) aufweist,
- wobei die Tülle (6) einen tangential umlaufend abgedichteten Hohlraum (22) aufweist,
- wobei der Leitungsstrang (4) durch den Hohlraum (22) hindurchgeführt ist,
- wobei in den Verteilungskanal (26) ein Dichtmaterial (56) gefüllt ist, welches mindestens einen Dichtkörper (16) bildet,
- wobei der Hohlraum (22) frei von Dichtmaterial (56) ist,
- wobei ein Teil des Dichtmaterials (56) aus der mindestens einen Austrittsöffnung (38, 30, 32) als der mindestens eine Dichtkörper (16, 58) austritt.

12. Vorrichtung (2) nach Anspruch 11,
- wobei die Tülle (6) aus einem ersten Schalenteil (34), einem zweiten Schalenteil (34) gebildet ist,
- wobei das erste Schalenteil (34) und das zweite Schalenteil (34) um den Leitungsstrang (4) herum zusammengesetzt sind und dabei den tangential umlaufend abgedichteten Hohlraum (22) bilden.

13. Vorrichtung (2) nach Anspruch 11 oder 12, wobei der Leitungsstrang (4) in einer Komponente, insbesondere in einer elektrischen Komponente, vorzugsweise in einem Steckverbinder (8), geführt ist.

14. Vorrichtung (2) nach einem der Ansprüche 11 bis 13, wobei der Verteilungskanal (26) zumindest teilweise in einen Flanschkragen (14) der Tülle (6) integriert ist, und wobei die Austrittsöffnung (28) am Flanschkragen (14) angeordnet ist.

15. Vorrichtung (2) nach einem der Ansprüche 11 bis 14, wobei ein Kabelschutz (12) um den Leitungsstrang (4), und auf einen Anschlussstutzen (18) der Tülle (6) angebracht ist.

16. Vorrichtung (2) nach Anspruch 15, wobei der Kabelschutz (12) auf einen Stutzen der Komponente, insbesondere auf einen Stutzen des Steckverbinders (8), angebracht ist.

17. Vorrichtung (2) nach Anspruch 15 oder 16, wobei sich der Verteilungskanal (26) in den Anschlussstutzen (18) erstreckt.

18. Vorrichtung (2) nach einem der Ansprüche 15 bis 17, wobei der Anschlussstutzen (18) im Bereich des aufgebrachten Kabelschutzes (12) die Austrittsöffnung (32) aufweist, durch der Dichtkörper (58) eine Abdichtung des Kabelschutzes (12) zum Anschlussstutzen (18) realisiert.

19. Vorrichtung (2) nach einem der Ansprüche 12 bis 18, wobei die Schalenteile (34) der Tülle (6) form- und/oder kraftschlüssig miteinander gefügt sind.
